# EUROPEAN PATENT APPLICATION

(11) **EP 1 306 608 A1**
(43) Date of publication of application: **02.05.2003**
(21) Application number: 02079356.8
(22) Date of filing: 21.10.2002
(51) Int. Cl.: F21V 8/00

(54) **Device comprising at least one light source for emitting a light beam to a light guide situated above the light source**

(30) Priority: 25.10.2001 EP 01204087
(71) Applicant: Lumileds Lighting the Netherlands B.V., 5684 PJ Best (NL)
(72) Inventor: Keuper,Matthijs Hendrik, c/o Int.Octrooibureau BV, 5656 AA Eindhoven (NL); Hendriks,Robert Frans Maria, c/o Int.Octr.bur.B.V., 5656 AA Eindhoven (NL)
(74) Representative: Dusseldorp, Jan Charles

(57) **Abstract**

A compact backlight system for illuminating a display device having a light-emitting panel, said system comprising at least one light source for emitting a light beam to a light guide (6) placed next to the light source, wherein the light guide (6) is provided with an input surface (1) facing said light source for receiving the light beam originating from the light source, and with an output surface (2) facing away from the light source for transmitting the light beam guided in the light guide (6). According to the invention the light guide (6) transforms the light beam received into the transmitted light beam by means of translation and/or rotation.

## Description

The invention relates to an illumination system comprising at least one light source for emitting a light beam to a light guide situated next to the light source, which light guide is provided with an input surface that faces the light source and that is used for coupling in the light beam originating from the light source, and with an output surface for coupling out the light beam guided by said light guide. It is to be noted that the term "next to" is to be taken to include any random spatial orientation, such as below, above, at the side of, etc.

Such an illumination system is known from European patent publication No. 0 945 673 (Citizen Electronics Co., Ltd.). The known illumination system is provided with a LED (light-emitting diode) that serves as the light source, and with a light guide of a transparent synthetic resin having a semi-circular input surface, which is arranged above said LED. A light beam originating from the LED is coupled in by the semi-circular input surface of the light guide and, subsequently, coupled out from a strip-shaped output surface of the light guide. This transformation of the incoming light beam to a strip-shaped outgoing light beam takes place by means of all kinds of reflection surfaces and air prisms present in the light guide.

A drawback of the illumination system disclosed in the above-mentioned European patent specification resides in that the reflection surfaces and air prisms used have proved to be unsuitable in practice to minimize the width of the strip-shaped outgoing light beam, i.e. the thickness of the strip. Particularly in the case of laptop computers, the thickness of the hinged part of the laptop wherein the display screen is situated is determined by said width of the strip-shaped outgoing light beam which, together with other optical means, such as plate-shaped light-guiding means, is ultimately responsible for the illumination of the display screen. In practice, there is a need of minimizing the thickness of said hinged part of the laptop, so that, apart from aesthetic considerations, it becomes possible to keep the weight of the laptop as low as possible. In addition, a small width of the strip-shaped outgoing light beam enables said plate-shaped light-guiding means to be manufactured by injection molding.

It is an object of the invention to obviate the above-mentioned drawback of the prior art, which object is achieved by an illumination system of the type mentioned in the opening paragraph which is characterized in accordance with the invention in that the light guide transforms by means of translation and/or rotation the light beam coupled-in into the light beam coupled-out. By virtue thereof, the light beam coupled-out can be given any desired shape, independent of the shape of the light beam coupled-in. For example, in a laptop computer, a (very) small width of the light beam coupled-out, i.e. a (very) small thickness of the strip, can be realized.

In a preferred embodiment of an illumination system in accordance with the invention, the light guide comprises at least two sub-light guides which each transform by means of translation and/or rotation a part of the light beam coupled-in, sub-light beams guided and coupled out by the sub-light guides jointly forming the light beam coupled-out. In particular, the sub-light guides each transform at least substantially 50% of the light beam coupled-in.

In a further preferred embodiment of an illumination system in accordance with the invention, the joint cross-section of the sub-light guides throughout their length is at least substantially equal to the input surface of the light guide. This means that the input surface of the light guide corresponds in size to its output surface, as a result of which there is no light loss.

In a further preferred embodiment of an illumination system in accordance with the invention, the light beam coupled-out is strip-shaped. By virtue thereof, the illumination system in question is particularly suitable to use the light guide thereof for guiding the light beam coupled-out to a corresponding strip-shaped input surface of light-guiding means (for example in the form of a synthetic resin plate) that belong to a screen of a laptop computer, desktop computer, LCD-TV, organizer or mobile telephone.

In a further preferred embodiment of an illumination system in accordance with the invention, this illumination system comprises at least two spaced light sources in the form of LEDs.

The invention also refers to a method for emitting a light beam, by means of at least one light source, to a light guide situated next to the light source, wherein the light beam originating from the light source is coupled into an input surface of the light guide facing the light source, and wherein the light beam guided by the light guide is coupled out from an output surface of the light guide, characterized in that the light beam coupled-in is transformed by the light guide by means of translation and/or rotation into the light beam coupled-out.

The invention finally also relates to a display device provided with an illumination system in accordance with the invention, said display device possibly comprising an LCD (liquid crystal display).

These and other aspects of the invention will be apparent from and elucidated with reference to the embodiment(s) described hereinafter.

In the drawings:
Figs. 1 and 2 diagrammatically show various ways in accordance with the invention of transforming an incoming light beam via translation and/or rotation by means of the light guide in question into an outgoing light beam; and
Fig. 3 shows diagrammatically and in perspective two views of three sub-light guides in the light guide in question.

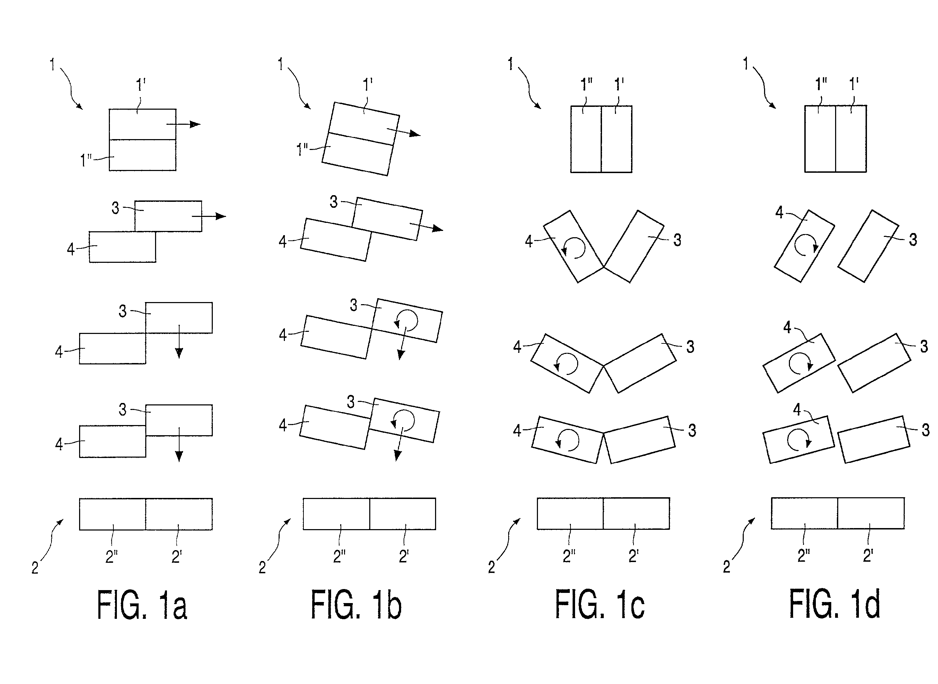

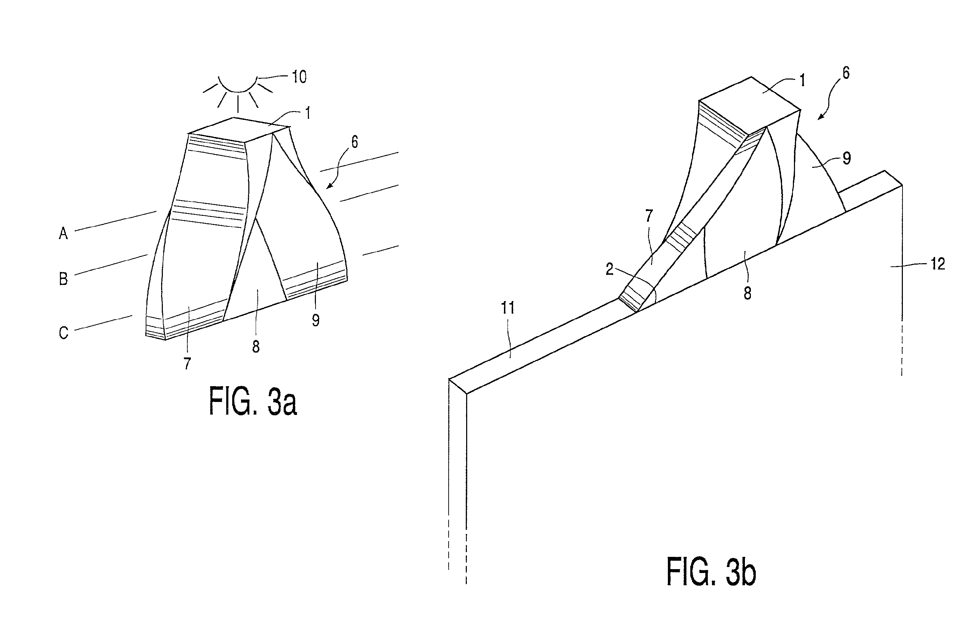

Fig. 1 a shows, at the top, a top view of an input surface 1 of a light guide in accordance with the invention as shown in Fig. 3, and, at the bottom, a bottom view of an output surface 2 of the light guide. Between these views of the input and output surfaces 1, 2, various cross-sectional views of the light guide are shown taken on the lines A, B and C in Fig. 3. The light guide is composed of two sub-light guides which each have an input surface 1', 1" and an output surface 2', 2". As shown in Fig. 1a, the input surfaces 1', 1" jointly form the input surface 1, and the output surface 2 is formed by the output surfaces 2', 2", said input surface 1 and said output surface 2 being equal in size. Fig. 1a further shows that the cross-section 3 of one sub-light guide is equal to the input surface 1' as well as to the output surface 2', and the same applies to the cross-section 4 of the other sub-light guide with regard to the input surface 1" and the output surface 2". Both sub-light guides thus form light pipes, as it were, through which each time 50% of a coupled-in light beam originating from an LED serving as the light source is guided. In the light pipe of one light guide having input surface 1', the relevant part of the light beam is transformed by means of translation, while in the light pipe of the other light guide having input surface 1", the relevant part of the light beam is passed without transformation: the net effect is that a strip-shaped light beam is coupled out from the output surface 2.

Figs. 1b, 1c and 1d show that all combinations of translation and rotation of the relevant parts of the light beam brought about by the light pipes of the sub-light guides are different, however, the final result is always the same, i.e. a strip-shaped light beam coupled-out from the output surface 2. Parts corresponding to those shown in Fig. 1a are indicated by means of the same reference numerals.

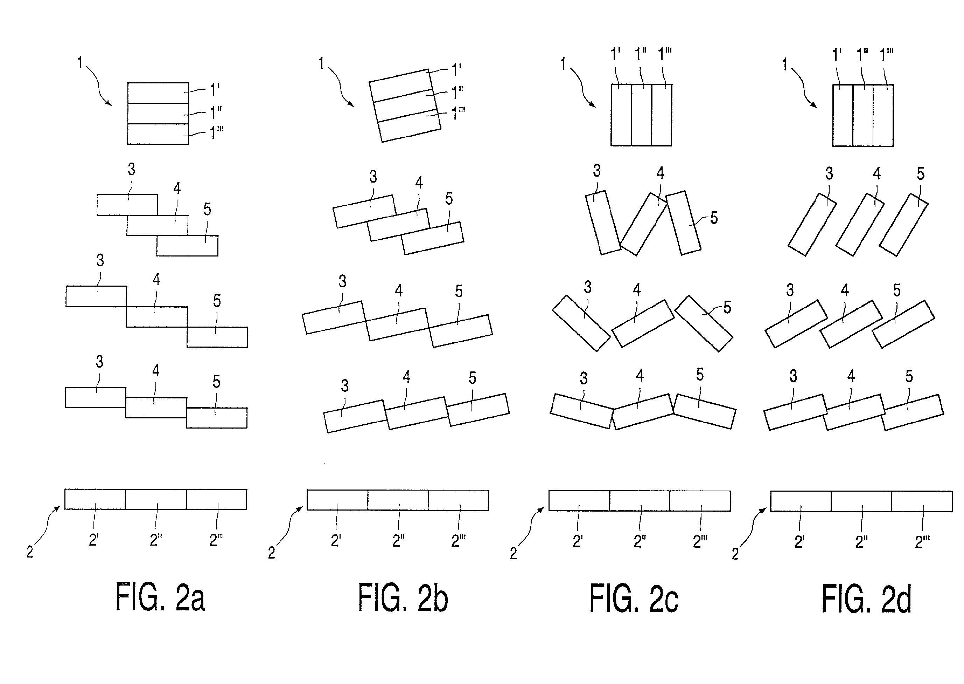

The situation shown in Fig. 2a corresponds to that shown in Fig. 1a, with this difference that in Fig. 2a there are three sub-light guides each having an input surface 1', 1" and 1"' (jointly forming the input surface 1), an output surface 2', 2" and 2"' (jointly forming the output surface 2) and cross-sections 3, 4 and 5. Also in Fig. 2a, the sub-light guides form light pipes, the input surface 1', 1" and 1"' being equal in size to the cross-section 3, 4 and 5 and to the output surface 2', 2" and 2"'. Fig. 2a shows that the light pipes each transform by means of translation one third of the light beam coupled-in, the net effect being a strip-shaped light beam that is coupled out from the output surface 2. Figs. 2b, 2c and 2d correspond to Fig. 2a, corresponding parts being indicated by means of the same reference numerals. However, Figs. 2b, 2c and 2d relate to a combined translation and rotation of the light beam coupled-in.

In Figs. 3a and 3b, different perspective views of a light guide 6 composed of three sub-light guides 7, 8, 9 are diagrammatically shown. Fig. 3a shows a LED 10 that illuminates the input surface 1 of the light guide 6. Fig. 3b shows that the output surface 2 of the light guide 6 faces an input surface 11 of a synthetic resin plate 12 present in a laptop computer, which further guides the strip-shaped light beam coupled out from the output surface 2 to an LCD screen of the laptop computer. It will be clear that the greater the reduction in width of the strip-shaped light beam, the thinner the synthetic resin plate can be.

It is to be noted that the invention is not limited to the embodiments described hereinabove, and that other variants that fall within the scope of the appended claims are also included in the invention.

## Claims

1. An illumination system comprising at least one light source (10) for emitting a light beam to a light guide (6) situated next to the light source (10), which light guide (6) is provided with an input surface (1) that faces the light source (10) and that is used for coupling in the light beam originating from the light source (10), and with an output surface (2) for coupling out the light beam guided by said light guide (6), **characterized in that** the light guide (6) transforms by means of translation and/or rotation the light beam coupled-in into the light beam coupled-out.

2. An illumination system as claimed in claim 1, wherein the light guide (6) comprises at least two sub-light guides (7, 8, 9) which each transform by means of translation and/or rotation a part of the light beam coupled-in, sub-light beams guided and coupled out by the sub-light guides (7, 8, 9) jointly forming the light beam coupled-out.

3. An illumination system as claimed in claim 2, wherein the sub-light guides (7, 8, 9) each transform at least substantially 50% of the light beam coupled-in.

4. An illumination system as claimed in claim 2 or 3, wherein the joint cross-section (3, 4, 5) of the sub-light guides (7, 8, 9) throughout their length is at least substantially equal to the input surface (1) of the light guide (6).

5. An illumination system as claimed in any one of the preceding claims 1 through 4, wherein the light beam coupled-out is strip-shaped.

6. An illumination system as claimed in any one of the preceding claims 1 through 5, wherein this illumination system comprises at least two spaced light sources (10) in the form of LEDs.

7. An illumination system as claimed in any one of the preceding claims 1 through 6, wherein the light guide (6) guides the light beam coupled-out to an input surface (11) of another light guide (12) that belongs to a screen of a laptop computer, desktop computer, LCD-TV, organizer or mobile telephone.

8. A method for emitting a light beam, by means of at least one light source (10), to a light guide (6) situated above the light source (10), wherein the light beam originating from the light source (10) is coupled into an input surface (1) of the light guide (6) facing the light source (10), and wherein the light beam guided by the light guide (6) is coupled out from an output surface (2) of the light guide (6), **characterized in that** the light beam coupled-in is transformed by the light guide (6) by means of translation and/or rotation into the light beam coupled-out.

9. A display device provided with an illumination system as claimed in any one of the preceding claims 1 through 7.

10. A display device as claimed in claim 9, wherein the display device comprises an LCD (liquid crystal display).
